# FASCICULE DE BREVET EUROPEEN

(11) **EP 1 429 131 B1**
(45) Date de publication et mention de la délivrance du brevet: **19.01.2011**
(21) Numéro de dépôt: 03292755.0
(22) Date de dépôt: 04.11.2003
(51) Int. Cl.: G01L 27/00

(54) **Procédé et dispositif pour détecter la défaillance d'un capteur de pression d'une centrale anémométrique d'un aéronef**
Verfahren und Gerät zur Detektion einer Drucksensor-Fehlfunktion eines Luftfahrzeug-Anemometers
Procedure and apparatus for detection of the malfunction of a pressure sensor of an aircraft anemometer station

(30) Priorité: 27.11.2002 FR 0214871
(43) Date de publication de la demande: 16.06.2004
(73) Titulaire: AIRBUS OPERATIONS (SAS), 31060 Toulouse (FR)
(72) Inventeur: D'Ouince, Arnaud, 31300 Toulouse (FR); Ley, Bruno, 31470 Sainte Foy de Peyrolieres (FR); Gaucheron, Philippe, 31470 Fontenilles (FR); Bellier, Arnaud, 31200 Toulouse (FR)
(74) Mandataire: Hauer, Bernard

(56) Documents cités:
- EP-A- 0 393 730
- US-A- 5 796 612
- US-B1- 6 232 890
- US-B1- 6 285 298

## Description

La présente invention concerne un procédé et un dispositif pour détecter la défaillance d'un capteur de pression d'une centrale anémométrique d'un aéronef, qui comporte au moins deux capteurs de pression.

On sait qu'une telle centrale anémométrique est destinée à mesurer des "données air" ("air data" en anglais) permettant de déterminer des valeurs de paramètres tels que l'altitude de l'aéronef, sa vitesse, ... A cet effet, ladite centrale anémométrique comporte des capteurs de pression qui sont reliés par des tubes à des sondes qui traversent le fuselage de l'aéronef.

Généralement, un avion de transport civil comporte trois centrales anémométriques de ce type, dont:
- une première fournit des données qui sont affichées dans le poste de pilotage, à l'attention du pilote ;
- une deuxième fournit des données qui sont également affichées dans le poste de pilotage, mais à l'attention du copilote ; et
- une troisième est utilisée en secours pour parer le cas échéant à la défaillance de l'une desdites deux premières centrales.

Pour des raisons évidentes de sécurité, ces trois centrales anémométriques doivent être réalisées et doivent fonctionner, de façon complètement indépendante les unes des autres, puisque sinon la défaillance de l'une aurait des répercussions sur les mesures des autres centrales.

Par ailleurs, on sait que des erreurs humaines, notamment lors d'opérations de maintenance de l'avion, peuvent entraîner la défaillance d'un ou plusieurs des capteurs de pression d'une telle centrale anémométrique.

Par exemple, les personnels chargés d'effectuer une opération de lavage de l'avion collent fréquemment un morceau de ruban adhésif sur chacune des sondes de la centrale anémométrique, afin d'éviter que de l'eau pénètre dans le tube lors dudit lavage. S'ils oublient d'enlever l'un desdits morceaux de ruban adhésif après le lavage, le capteur de pression correspondant sera défaillant lors du vol suivant de l'avion, puisqu'il ne pourra pas mesurer la pression de l'air extérieur au fuselage. Il mesurera en fait la pression de l'air dans le tube qui est fermé, à son extrémité du côté de la sonde, par le morceau adhésif.

Un autre exemple de défaillance concerne le cas où des personnels de maintenance déconnectent le tube et le capteur de pression au niveau d'un connecteur approprié, par exemple pour nettoyer l'intérieur de ce tube. S'ils oublient de reconnecter le tube sur le capteur de pression après avoir réalisé l'opération de maintenance, ledit capteur de pression sera aussi défaillant, puisqu'il mesurera la pression de l'air à l'intérieur du fuselage au lieu de mesurer la pression de l'air extérieur au fuselage.

La présente invention a pour objet de remédier à ces inconvénients. Elle concerne un procédé pour détecter, de façon rapide et fiable, et à coût réduit, la défaillance d'un capteur de pression d'une centrale anémométrique d'un aéronef, qui comporte au moins deux capteurs de pression.

A cet effet, ledit procédé est remarquable, selon l'invention, en ce que l'on réalise au moins la première suite d'étapes suivante :
A1) on réalise des mesures de pression à l'aide desdits deux capteurs de pression de manière à obtenir, respectivement, des première et deuxième valeurs de pression ;
A2) on calcule l'écart entre lesdites première et deuxième valeurs de pression;
A3) on compare cet écart à une valeur de seuil prédéterminée, par exemple 30 mbar ; et
A4) si ledit écart est supérieur à ladite valeur de seuil, on affiche une information de défaillance de ladite centrale anémométrique sur un dispositif de visualisation qui est monté sur ledit aéronef.

Ainsi, grâce à ladite première suite d'étapes A1 ) à A4), on est en mesure de détecter de façon rapide et fiable toute défaillance d'un capteur de pression d'une centrale anémométrique, et ceci sans faire appel à des informations externes à cette centrale anémométrique, telles que par exemple des informations émises par d'autres centrales anémométriques de l'aéronef. Ceci permet donc, en cas de présence d'une pluralité de centrales anémométriques sur l'aéronef, de garantir la stricte indépendance des différentes centrales anémométriques de l'aéronef les unes par rapport aux autres.

Avantageusement, on réalise de plus les étapes suivantes:
- on mesure la vitesse de l'aéronef relativement à l'air de manière à obtenir une valeur de vitesse air;
- on compare la valeur de vitesse air ainsi mesurée à un seuil de vitesse prédéterminé ; et
- on affiche une information de défaillance à ladite étape A4) [de la première suite d'étapes A1) à A4) précitée], uniquement si ladite valeur de vitesse air est supérieure audit seuil de vitesse.

Ceci présente l'avantage de ne pas signaler intempestivement une défaillance de ladite centrale anémométrique, lorsque l'aéronef est soumis au sol à un vent latéral entraînant une différence importante entre les pressions mesurées par des capteurs de pression situés à des endroits différents sur le fuselage, notamment en partie droite et en partie gauche du fuselage. Ce seuil de vitesse prédéterminé, par exemple 25 m/s (environ 50 noeuds), est choisi, de préférence, de sorte que l'effet d'un vent latéral correspondant à un vent d'intensité maximale n'entraîne pas la signalisation injustifiée d'une défaillance lors du décollage de l'aéronef.

En outre, dans un mode de réalisation particulier:
- on prévoit au moins trois capteurs de pression pour ladite centrale anémométrique ;
- à l'étape A1), on réalise des mesures de pression à l'aide desdits trois capteurs de pression ;
- à l'étape A2), on calcule tous les écarts possibles entre les différentes valeurs de pression prises deux à deux;
- à l'étape A3), on compare tous les écarts ainsi calculés à ladite valeur de seuil ; et
- à l'étape A4), on affiche ou non une information de défaillance en fonction des différentes comparaisons ainsi réalisées.

Plus précisément, à ladite étape A4), on affiche une information de défaillance:
- dans une première variante, si au moins l'un desdits écarts est supérieur à ladite valeur de seuil ; et
- dans une seconde variante, uniquement si tous lesdits écarts sont supérieurs à ladite valeur de seuil.

Par ailleurs, le procédé conforme à l'invention est également remarquable en ce que l'on réalise, de plus, au moins la deuxième suite d'étapes suivante :
B1) on réalise des mesures de pression à l'aide d'au moins un capteur de pression de la centrale anémométrique, sur l'aéronef qui est au sol et dont la cabine n'est pas pressurisée, de manière à obtenir une troisième valeur de pression;
B2) à partir de cette troisième valeur de pression, on calcule une première altitude correspondant à l'altitude du sol;
B3) on pressurise la cabine de l'aéronef;
B4) on fait décoller l'aéronef;
B5) à un temps prédéterminé après le décollage, on réalise des mesures de pression à l'aide dudit capteur de pression de manière à obtenir une quatrième valeur de pression ;
B6) à partir de cette quatrième valeur de pression, on calcule une deuxième altitude correspondant à l'altitude de l'aéronef à l'instant précité;
B7) on calcule une troisième altitude correspondant à l'altitude de l'aéronef par rapport au sol, à partir desdites première et deuxième altitudes;
B8) on compare ladite troisième altitude à un seuil d'altitude prédéterminé ; et
B9) si ladite troisième altitude est inférieure audit seuil d'altitude prédéterminé, on affiche une information de défaillance de ladite centrale anémométrique sur un dispositif de visualisation qui est monté sur ledit aéronef.

Cette deuxième suite d'étapes B1) à B9) présente l'avantage de permettre la détection de la défaillance simultanée de plusieurs capteurs de pression d'une même centrale anémométrique. Elle peut par exemple être mise en oeuvre par un système de surveillance / signalisation d'alarmes prévu sur l'aéronef.

En outre, avantageusement, dans le cas d'un aéronef pourvu d'au moins deux moteurs, ledit seuil d'altitude est inférieur à l'altitude atteinte par l'aéronef, audit temps prédéterminé après le décollage, en cas de panne d'au moins l'un desdits moteurs. Dans ce cas, de préférence, ledit temps prédéterminé après le décollage est sensiblement égal à 30 secondes, et ledit seuil d'altitude est sensiblement égal à 30 mètres (environ 100 pieds).

Par ailleurs, de façon avantageuse, on réalise, de plus, les étapes suivantes :
- on surveille le fonctionnement des moteurs de l'aéronef ; et
- lorsque l'on détecte un dysfonctionnement d'au moins l'un des moteurs de l'aéronef, on n'affiche pas (le cas échéant) une information de défaillance à l'étape B9) précitée.

Le procédé conforme à l'invention est également remarquable en ce que l'on réalise, de plus, au moins la troisième suite d'étapes suivante:
C1) on prévoit sur au moins certains des capteurs de pression de la centrale anémométrique au moins un détecteur qui est susceptible de détecter un branchement défaillant entre le capteur de pression correspondant et une sonde de ladite centrale anémométrique, qui est associée à ce capteur de pression ;
C2) on réalise l'acquisition au sol, avant le décollage, d'informations rotatives au branchement, issues desdits détecteurs ; et
C3) si au moins l'un desdits détecteurs signale un branchement défaillant, on affiche une information de défaillance de ladite centrale anémométrique sur un dispositif de visualisation qui est monté sur l'aéronef.

De préférence, au moins l'un desdits détecteurs est intégré dans un connecteur pneumatique destiné à raccorder un tube pneumatique associé à une sonde, au capteur de pression correspondant.

La présente invention concerne également un dispositif pour détecter la défaillance d'un capteur de pression d'une centrale anémométrique d'un aéronef, qui comporte au moins deux capteurs de pression.

Selon l'invention, ledit dispositif est remarquable en ce qu'il comporte :
- des moyens pour acquérir les valeurs de mesures réalisées par lesdits capteurs de pression;
- des moyens de calcul ;
- des moyens de comparaison;
- des moyens de sélection ; et
- des moyens d'affichage susceptibles d'afficher, sur au moins un dispositif de visualisation qui est monté sur ledit aéronef, une information de défaillance de ladite centrale anémométrique.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 illustrent schématiquement des modes de réalisation différents d'une unité centrale d'un dispositif conforme à l'invention.

Les figures 4 et 5 illustrent schématiquement des éléments complémentaires d'une unité centrale d'un dispositif conforme à l'invention.

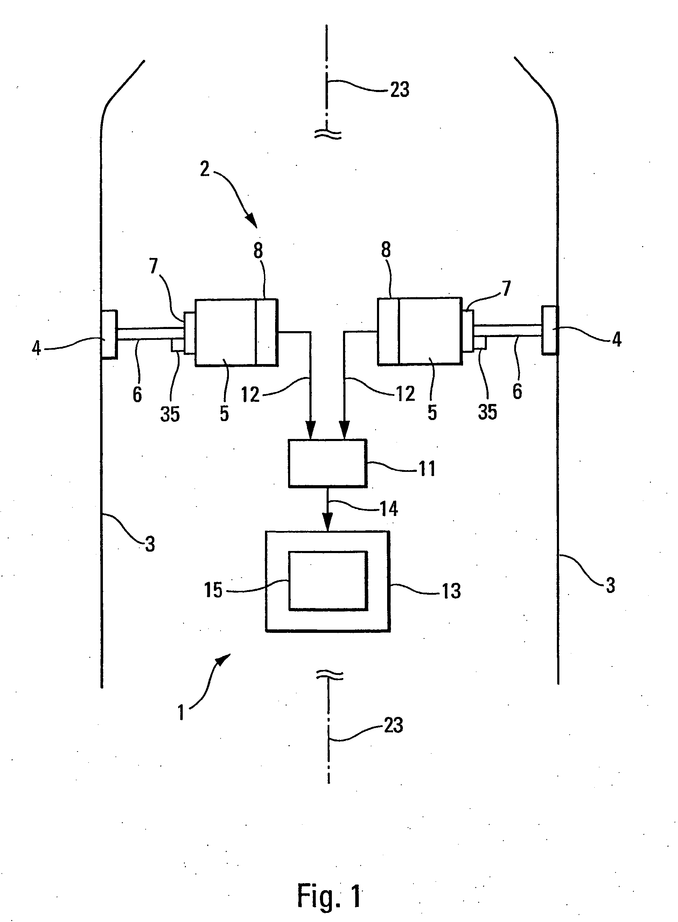

Le dispositif 1 conforme à l'invention et représenté schématiquement sur la figure 1 est destiné à la surveillance d'une centrale anémométrique 2 usuelle d'un aéronef, en particulier d'un avion de transport civil, dont on a uniquement représenté une partie du fuselage 3 sur cette figure 1 pour des raisons de simplification du dessin.

On sait qu'une telle centrale anémométrique 2 est destinée à mesurer des "données air" ("air data" en anglais) permettant de déterminer des valeurs de paramètres tels que l'altitude, la vitesse, ... de l'aéronef. Pour ce faire, la centrale anémométrique 2 comporte, de façon connue :
- des sondes 4 qui sont montées, de façon traversante, sur le fuselage 3 de l'aéronef et accèdent à l'extérieur;
- des capteurs de pression 5 qui sont reliés chacun par l'intermédiaire d'un tube 6 à une sonde 4. Généralement, un tel tube 6 qui réalise une liaison pneumatique est connecté au capteur de pression 5 associé au moyen d'un connecteur pneumatique 7 qui permet de le déconnecter et le reconnecter facilement et rapidement. De plus, à chaque capteur de pression 5 est associé un convertisseur analogique/numérique 8 ; et
- une unité centrale 11 qui est reliée aux capteurs de pression 5 par des liaisons électriques 12, par exemple sous forme d'un bus de communication au standard "ARINC 429".

Il est toutefois également envisageable d'intégrer les capteurs de pression 5 dans l'unité centrale 11.

Généralement, un avion de transport civil comporte trois centrales anémométriques 2 de ce type, dont :
- une première fournit des données qui sont affichées dans le poste de pilotage, à l'attention du pilote;
- une deuxième fournit des données qui sont affichées dans le poste de pilotage, à l'attention du copilote ; et
- une troisième est utilisée en secours pour parer, le cas échéant, à la défaillance de l'une desdites première et deuxième centrales.

Pour des raisons évidentes de sécurité, ces trois centrales anémométriques doivent être réalisées et doivent fonctionner, de façon complètement indépendante, puisque sinon la défaillance de l'une aurait des répercussions sur les mesures des autres centrales.

Le dispositif 1 conforme à l'invention a pour objet de détecter toute défaillance d'un capteur de pression 5 d'une telle centrale anémométrique 2.

A cet effet, ledit dispositif 1 comporte:
- ladite unité centrale 11 qui est telle que précisé ci-dessous ; et
- un moyen d'affichage 13 qui est relié par une liaison 14 à l'unité centrale 11 et qui est susceptible d'afficher, le cas échéant, sur au moins un dispositif de visualisation, notamment un écran de visualisation usuel 15, monté dans le poste de pilotage de l'aéronef, une information de défaillance d'au moins l'un desdits capteurs de pression 5 (correspondant donc à une information de défaillance de ladite centrale anémométrique 2).

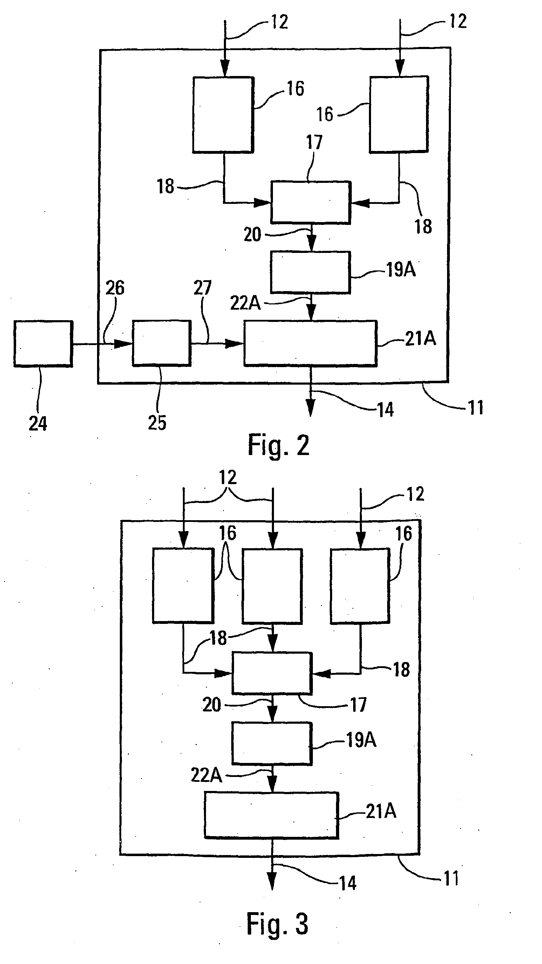

Selon l'invention, ladite unité centrale 11 comporte, comme représenté sur la figure 2 :
- des moyens d'acquisition de données 16 qui sont reliés (liaisons 12) aux deux capteurs de pression 5 de la figure 1 et qui font l'acquisition de première et deuxième valeurs de pression relatives aux mesures réalisées respectivement par lesdits deux capteurs de pression 5 ;
- un moyen de calcul 17 qui est relié par des liaisons 18 auxdits moyens d'acquisition de données 16 et qui calcule l'écart entre lesdites première et deuxième valeurs de pression ;
- un moyen de comparaison 19A qui compare cet écart reçu par une liaison 20 à une valeur de seuil prédéterminée enregistrée, par exemple 30 mbar ; et
- un moyen de sélection 21A qui émet (ou non) un ordre d'affichage d'une information de défaillance (ordre qui est transmis au moyen d'affichage 13 par la liaison 14), en fonction du résultat (reçu par une liaison 22A) de cette comparaison. Plus précisément, il émet un ordre d'affichage si ledit écart est supérieur à ladite valeur de seuil et il n'émet pas d'ordre dans le cas contraire.

Ainsi, grâce au dispositif 1, on est en mesure de détecter de façon rapide et fiable toute défaillance d'un capteur de pression 5 de la centrale anémométrique 2, et ceci sans faire appel à des informations externes à cette centrale anémométrique 2, telles que par exemple des informations émises par d'autres centrales anémométriques de l'aéronef. Ceci permet donc de garantir, dans le cas d'une pluralité de centrales anémométriques sur l'aéronef, la stricte indépendance des différentes centrales anémométriques les unes par rapport aux autres.

Dans un mode de réalisation préféré, les deux (ou au moins deux) capteurs de pression 5 de la centrale anémométrique 2 sont montés de part et d'autre de l'axe longitudinal 23 du fuselage 3 de l'aéronef, comme représenté sur la figure 1.

Dans un mode de réalisation particulier, le dispositif 1 comporte de plus, comme représenté sur la figure 2 :
- un moyen usuel 24 pour mesurer la vitesse de l'aéronef relativement à l'air de manière à obtenir une valeur de vitesse air ; et
- un moyen 25 qui est relié par une liaison 26 au moyen 24 pour comparer la valeur de vitesse air ainsi mesurée à un seuil de vitesse prédéterminé, par exemple 25 m/s (environ 50 noeuds).

Dans ce cas, le moyen de sélection 21 A qui est relié par une liaison 27 audit moyen 25 ordonne l'affichage d'une information de défaillance, uniquement si, en plus des conditions précitées, ladite valeur de vitesse air est supérieure audit seuil de vitesse.

Dans un autre mode de réalisation, le dispositif 1 comporte au moins trois capteurs de pression 5 et l'unité de calcul 11 comprend autant (trois, quatre, ...) de moyens d'acquisition 16 (figure 3) qu'il existe de capteurs de pression 5.

Dans ce cas :
- le moyen de calcul 17 calcule tous les écarts possibles entre les différentes valeurs de pression prises deux à deux;
- le moyen de comparaison 19A compare tous les écarts ainsi calculés à ladite valeur de seuil ; et
- le moyen de sélection 21 A ordonne un éventuel affichage d'une information de défaillance, en fonction des différentes comparaisons ainsi réalisées.

Plus précisément, ledit moyen de sélection 21A ordonne l'affichage d'une information de défaillance:
- dans une première variante, si au moins l'un desdits écarts est supérieur à ladite valeur de seuil ; et
- dans une seconde variante, si tous lesdits écarts sont supérieurs à ladite valeur de seuil.

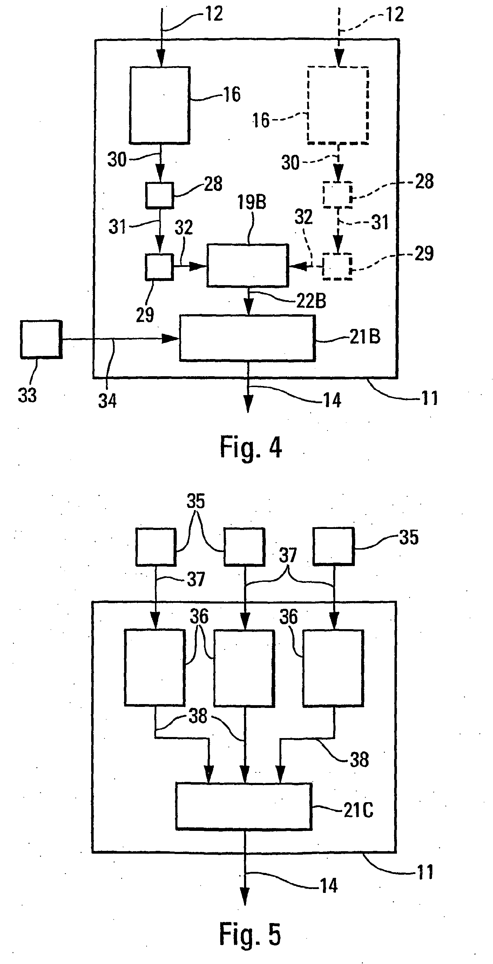

Le dispositif 1 peut également comporter un moyen de calcul 28 et une mémoire 29 qui sont reliés (liaisons 30 à 32) entre un moyen d'acquisition 16 et le moyen de comparaison 19B, comme représenté sur la figure 4.

Dans ce cas, le dispositif 1 peut mettre en oeuvre le procédé suivant :
B1) réaliser des mesures de pression à l'aide d'au moins un capteur de pression 5 de la centrale anémométrique 2, sur l'aéronef qui est au sol et dont la cabine n'est pas pressurisée, de manière à obtenir une troisième valeur de pression;
B2) à partir de cette troisième valeur de pression, calculer une première altitude correspondant à l'altitude du sol ;
B3) pressuriser la cabine (poste de pilotage et cabine des passagers) de l'aéronef ;
B4) faire décoller l'aéronef ;
B5) à un instant t0 correspondant à un temps T prédéterminé après le décollage, réaliser des mesures de pression à l'aide dudit capteur de pression 5 de manière à obtenir une quatrième valeur de pression;
B6) à partir de cette quatrième valeur de pression, calculer une deuxième altitude correspondant à l'altitude de l'aéronef audit temps prédéterminé T après le décollage (c'est-à-dire audit instant t0) ;
B7) calculer une troisième altitude correspondant à l'altitude de l'aéronef par rapport au sol, à partir desdites première et deuxième altitudes;
B8) comparer ladite troisième altitude à un seuil d'altitude prédéterminé; et
B9) si ladite troisième altitude est inférieure audit seuil d'altitude prédéterminé, ordonner l'affichage d'une information de défaillance de ladite centrale anémométrique 2 sur l'dispositif de visualisation 15.

De préférence, ledit seuil d'altitude est inférieur à l'altitude atteinte par l'aéronef, audit temps prédéterminé après le décollage, en cas de panne d'un moteur de l'aéronef (qui est, dans ce cas, pourvu d'au moins deux moteurs).

A titre d'illustration, ledit temps prédéterminé T après le décollage peut être sensiblement égal à 30 secondes, et ledit seuil d'altitude peut être sensiblement égal à 30 mètres (environ 100 pieds).

Le dispositif 1 peut également comporter des moyens usuels 33 pour surveiller les moteurs de l'aéronef. Ces moyens 33 sont reliés au moyen de sélection 21B par une liaison 34 pour l'informer de toute détection d'un dysfonctionnement d'au moins l'un des moteurs de l'aéronef. Dans ce cas, lorsqu'une défaillance d'un capteur de pression 5 est décelée, le moyen de sélection 21B ordonne l'affichage d'une information de défaillance uniquement si aucun dysfonctionnement d'un moteur n'est signalé en même temps par les moyens 33.

On notera que les éléments 19B, 21 B et 22B de la figure 4 peuvent correspondre aux éléments 19A, 21 A et 22A des figures 2 et 3. Il peut toutefois également s'agir de moyens séparés de ladite unité centrale 11.

Le mode de réalisation de la figure 4 présente l'avantage de permettre la détection de la défaillance de deux capteurs de pression 5 de la même centrale anémométrique 2. A cet effet, il peut comporter des éléments 16, 28 et 29 supplémentaires, comme illustré en traits interrompus.

Selon l'invention, on peut également prévoir sur au moins certains des capteurs de pression 5 (figures 1 et 5) au moins un détecteur 35 qui est susceptible de détecter un branchement défaillant entre le capteur de pression 5 correspondant et la sonde 4 qui est associée à ce capteur de pression 5.

Dans ce cas, l'unité centrale 11 comporte de plus, comme représenté sur la figure 5 :
- des moyens d'acquisition de données 36 qui sont reliés par des liaisons 37 auxdits détecteurs 35 et qui réalisent l'acquisition au sol, avant le décollage, d'informations relatives au branchement, qui proviennent desdits détecteurs 35 ; et
- un moyen de sélection 21 C qui est relié par des liaisons 38 auxdits moyens d'acquisition de données 36 et qui ordonne, si au moins l'un desdits détecteurs 35 signale un branchement défaillant, l'affichage d'une information de défaillance de la centrale anémométrique 2 sur ledit dispositif de visualisation 15.

Dans un mode de réalisation préféré, au moins l'un desdits détecteurs 35 est intégré dans un connecteur pneumatique 7 destiné à raccorder le tube pneumatique 6 associé à une sonde 4, au capteur de pression 5 correspondant. Un détecteur 35 peut notamment être un interrupteur actionné par le branchement du connecteur 7, une diode laser, ...

En outre, le moyen de sélection 21 C peut représenter le moyen de sélection 21 A et/ou le moyen de sélection 21 B, ou bien être indépendant de ces derniers.

## Revendications

1. Procédé pour détecter la défaillance d'un capteur de pression (5) d'une centrale anémométrique (2) d'un aéronef, qui comporte au moins deux capteurs de pression (5), procédé selon lequel on réalise au moins la première suite d'étapes suivante :
A1) on réalise des mesures de pression à l'aide desdits deux capteurs de pression (5) de manière à obtenir, respectivement, des première et deuxième valeurs de pression ;
A2) on calcule l'écart entre lesdites première et deuxième valeurs de pression ;
A3) on compare cet écart à une valeur de seuil prédéterminée ; et
A4) si ledit écart est supérieur à ladite valeur de seuil, on affiche une information de défaillance de ladite centrale anémométrique (2) sur un dispositif de visualisation (15) qui est monté sur ledit aéronef, **caractérisé en ce que** l'on réalise, de plus, au moins la deuxième suite d'étapes suivante :
B1) on réalise des mesures de pression à l'aide d'au moins un capteur de pression (5) de la centrale anémométrique (2), sur l'aéronef qui est au sol et dont la cabine n'est pas pressurisée, de manière à obtenir une troisième valeur de pression ;
B2) à partir de cette troisième valeur de pression, on calcule une première altitude correspondant à l'altitude du sol ;
B3) on pressurise la cabine de l'aéronef ;
B4) on fait décoller l'aéronef ;
B5) à un temps prédéterminé après le décollage, on réalise des mesures de pression à l'aide dudit capteur de pression (5) de manière à obtenir une quatrième valeur de pression ;
B6) à partir de cette quatrième valeur de pression, on calcule une deuxième altitude correspondant à l'altitude de l'aéronef ;
B7) on calcule une troisième altitude correspondant à l'altitude de l'aéronef par rapport au sol, à partir desdites première et deuxième altitudes ;
B8) on compare ladite troisième altitude à un seuil d'altitude prédéterminé ; et
B9) si ladite troisième altitude est inférieure audit seuil d'altitude prédéterminé, on affiche une information de défaillance de ladite centrale anémométrique (2) sur un dispositif de visualisation (15) qui est monté sur ledit aéronef.

2. Procédé selon la revendication 1,
**caractérisé en ce que** l'on réalise de plus les étapes suivantes :
- on mesure la vitesse de l'aéronef relativement à l'air de manière à obtenir une valeur de vitesse air ;
- on compare la valeur de vitesse air ainsi mesurée à un seuil de vitesse prédéterminé ; et
- on affiche une information de défaillance à ladite étape A4), uniquement si ladite valeur de vitesse air est supérieure audit seuil de vitesse.

3. Procédé selon la revendication 2,
**caractérisé en ce que** ledit seuil de vitesse est sensiblement égal à 25 m/s.

4. Procédé selon l'une des revendications 1 à 3,
**caractérisé en ce que** ladite valeur de seuil est sensiblement égale à 30 mbar.

5. Procédé selon l'une quelconque des revendications précédentes,
**caractérisé en ce que** l'on monte lesdits deux capteurs de pression (5) de part et d'autre de l'axe longitudinal (23) de l'aéronef, sur le fuselage (3) de ce dernier.

6. Procédé selon l'une quelconque des revendications précédentes,
**caractérisé en ce que** l'on prévoit au moins trois capteurs de pression (5) pour ladite centrale anémométrique (2), **en ce qu'**à l'étape A1), on réalise des mesures de pression à l'aide desdits trois capteurs de pression (5), **en ce qu'**à l'étape A2), on calcule tous les écarts possibles entre les différentes valeurs de pression prises deux à deux, **en ce qu'**à l'étape A3), on compare tous les écarts ainsi calculés à ladite valeur de seuil, et **en ce qu'**à l'étape A4), on affiche ou non une information de défaillance en fonction des différentes comparaisons ainsi réalisées.

7. Procédé selon la revendication 6,
**caractérisé en ce qu'**à l'étape A4), on affiche une information de défaillance, si au moins l'un desdits écarts est supérieur à ladite valeur de seuil.

8. Procédé selon la revendication 6,
**caractérisé en ce qu'**à l'étape A4), on affiche une information de défaillance, uniquement si tous lesdits écarts sont supérieurs à ladite valeur de seuil.

9. Procédé selon l'une quelconque des revendications précédentes,
**caractérisé en ce que**, dans le cas d'un aéronef pourvu d'au moins deux moteurs, ledit seuil d'altitude est inférieur à l'altitude atteinte par l'aéronef, audit temps prédéterminé après le décollage, en cas de panne d'au moins l'un desdits moteurs.

10. Procédé selon la revendication 9,
**caractérisé en ce que** ledit temps prédéterminé après le décollage est sensiblement égal à 30 secondes, et **en ce que** ledit seuil d'altitude est sensiblement égal à 30 mètres.

11. Procédé selon l'une quelconque des revendications précédentes,
**caractérisé en ce que** l'on réalise, de plus, les étapes suivantes :
- on surveille le fonctionnement des moteurs de l'aéronef ; et
- lorsque l'on détecte un dysfonctionnement d'au moins l'un des moteurs de l'aéronef, on n'affiche pas le cas échéant une information de défaillance à ladite étape B9).

12. Procédé selon l'une quelconque des revendications précédentes,
**caractérisé en ce que** l'on réalise, de plus, au moins la troisième suite d'étapes suivante :
C1) on prévoit sur au moins certains des capteurs de pression (5) au moins un détecteur (35) qui est susceptible de détecter un branchement défaillant entre le capteur de pression (5) correspondant et une sonde (4) de la centrale anémométrique (2), qui est associée à ce capteur de pression (5) ;
C2) on réalise l'acquisition au sol, avant le décollage, d'informations relatives audit branchement, issues desdits détecteurs (35) ; et
C3) si au moins l'un desdits détecteurs (35) signale un branchement défaillant, on affiche une information de défaillance de ladite centrale anémométrique (2) sur un dispositif de visualisation (15) qui est monté sur l'aéronef.

13. Procédé selon la revendication 12,
**caractérisé en ce qu'**au moins l'un desdits détecteurs (35) est intégré dans un connecteur pneumatique (7) destiné à raccorder un tube pneumatique (6) associé à une sonde (4), au capteur de pression (5) correspondant.

14. Dispositif pour détecter la défaillance d'un capteur de pression (5) d'une centrale anémométrique (2) d'un aéronef, qui comporte au moins deux capteurs de pression (5), ledit dispositif (1) comportant :
- des moyens (16) pour acquérir des mesures de pression réalisées à l'aide desdits deux capteurs de pression (5) de manière à obtenir, respectivement, des première et deuxième valeurs de pression ;
- des moyens de calcul (17, 28) pour calculer l'écart entre lesdites première et deuxième valeurs de pression ;
- des moyens de comparaison (19A, 19B) pour comparer cet écart à une valeur de seuil prédéterminée ; et
- des moyens d'affichage (13) pour afficher, sur au moins un dispositif de visualisation (15) qui est monté sur ledit aéronef, une information de défaillance de ladite centrale anémométrique (2) si ledit écart est supérieur à ladite valeur de seuil,
**caractérisé en ce qu'**il comporte, de plus, des moyens pour respectivement :
- calculer une première altitude correspondant à l'altitude du sol, à partir d'une troisième valeur de pression qui est mesurée sur l'aéronef qui est au sol et dont la cabine n'est pas pressurisée ;
- calculer une deuxième altitude correspondant à l'altitude de l'aéronef, à partir d'une valeur de pression qui est mesurée sur l'aéronef en vol à un temps prédéterminé après le décollage, dont la cabine est pressurisée ;
- calculer une troisième altitude correspondant à l'altitude de l'aéronef par rapport au sol, à partir desdites première et deuxième altitudes ;
- comparer ladite troisième altitude à un seuil d'altitude prédéterminé ; et
- afficher une information de défaillance de ladite centrale anémométrique (2) sur ledit dispositif de visualisation (15), si ladite troisième altitude est inférieure audit seuil d'altitude prédéterminé.

## Claims

1. A process for detecting the failure of a pressure sensor (5) of an air data system (2) of an aircraft, which comprises at least two pressure sensors (5), process according to witch at least the following first series of steps is carried out:
A1) pressure measurements are made with the aid of said two pressure sensors (5) so as to obtain, respectively, first and second pressure values;
A2) the deviation between said first and second pressure values is calculated;
A3) this deviation is compared with a predetermined threshold value; and
A4) if said deviation is greater than said threshold value, a failure cue relating to said air data system (2) is displayed on a display device (15) which is mounted on said aircraft,
**characterized in that** at least the following second series of steps is moreover carried out:
B1) pressure measurements are made with the aid of at least one pressure sensor (5) of the air data system (2), on the aircraft which is on the ground and the cabin of which is not pressurized, so as to obtain a third pressure value;
B2) on the basis of this third pressure value, a first altitude corresponding to the ground altitude is calculated;
B3) the cabin of the aircraft is pressurized;
B4) the aircraft is made to take off;
B5) at a predetermined time after takeoff, pressure measurements are made with the aid of said pressure sensor (5) so as to obtain a fourth pressure value;
B6) on the basis of this fourth pressure value, a second altitude corresponding to the aircraft's altitude is calculated;
B7) a third altitude corresponding to the aircraft's altitude with respect to the ground is calculated, from said first and second altitudes;
B8) said third altitude is compared with a predetermined altitude threshold; and
B9) if said third altitude is less than said predetermined altitude threshold, a failure cue relating to said air data system (2) is displayed on a display device (15) which is mounted on said aircraft.

2. The process as claimed in claim 1,
**characterized in that** the following steps are moreover carried out:
- the speed of the aircraft relative to the air is measured in such a way as to obtain an air speed value;
- the air speed value thus measured is compared with a predetermined speed threshold; and
- a failure cue is displayed in step A4), only if said air speed value is greater than said speed threshold.

3. The process as claimed in claim 2,
**characterized in that** said speed threshold is substantially equal to 25 m/s.

4. The process as claimed in one of claims 1 to 3,
**characterized in that** said threshold value is substantially equal to 30 mbar.

5. The process as claimed in any one of the preceding claims,
**characterized in that** said two pressure sensors (5) are mounted on either side of the longitudinal axis (23) of the aircraft, on the fuselage (3) of the latter.

6. The process as claimed in any one of the preceding claims,
**characterized in that** at least three pressure sensors (5) are provided for said air data system (2), wherein in step A1), pressure measurements are made with the aid of said three pressure sensors (5), **in that** in step A2), all the possible deviations between the various pressure values taken pairwise are calculated, **in that** in step A3), all the deviations thus calculated are compared with said threshold value, and **in that** in step A4), a failure cue is or is not displayed depending on the various comparisons thus carried out.

7. The process as claimed in claim 6,
**characterized in that** in step A4), a failure cue is displayed if at least one of said deviations is greater than said threshold value.

8. The process as claimed in claim 6,
**characterized in that** in step A4), a failure cue is displayed only if all said deviations are greater than said threshold value.

9. The process as claimed in any one of the preceding claims,
**characterized in that** in the case of an aircraft fitted with at least two engines, said altitude threshold is less than the altitude reached by the aircraft, at said predetermined time after takeoff, should there be a fault with at least one of said engines.

10. The process as claimed in claim 9,
**characterized in that** said predetermined time after takeoff is substantially equal to 30 seconds, and wherein said altitude threshold is substantially equal to 30 meters.

11. The process as claimed in any one of the preceding claims,
**characterized in that** the following steps are moreover carried out:
- the operation of the engines of the aircraft is monitored; and
- when a malfunction of at least one of the engines of the aircraft is detected, a failure cue is not displayed if appropriate in step B9).

12. The process as claimed in any one of the preceding claims,
**characterized in that** at least the following third series of steps is moreover carried out:
C1) at least one detector (35) which is able to detect a failed coupling between the corresponding pressure sensor (5) and a probe (4) of the air data system (2), which is associated with this pressure sensor (5), is provided on at least some of the pressure sensors (5);
C2) the acquisition on the ground, before takeoff, of cues relating to said coupling, which emanate from said detectors (35), is carried out; and
C3) if at least one of said detectors (35) signals a failed coupling, a failure cue relating to said air data system (2) is displayed on a display device (15) which is mounted on the aircraft.

13. The process as claimed in claim 12,
**characterized in that** at least one of said detectors (35) is integrated into a pneumatic connector (7) intended to join a pneumatic tube (6) associated with a probe (4) to the corresponding pressure sensor (5).

14. A device intended for detecting the failure of a pressure sensor (5) of an air data system (2) of an aircraft, which comprises at least two pressure sensors (5), said device (1) comprising :
- means (16) for acquiring pressure measurements made with the aid of said two pressure sensors (5) so as to obtain, respectively, first and second pressure values;
- means of calculation (17, 28) for calculating the deviation between said first and second pressure values;
- means of comparison (19A, 19B) for comparing this deviation with a predetermined threshold value; and
- means of display (13) for displaying, on at least one display device (15) which is mounted on said aircraft, a failure cue relating to said air data system (2), if said deviation is greater than said threshold value,
**characterized in that** it further comprises means for respectively :
- calculating a first altitude corresponding to the ground altitude, on the basis of a third pressure value measured on the aircraft which is on the ground and the cabin of which is not pressurized;
- calculating a second altitude corresponding to the aircraft's altitude, on the basis of a pressure value which is measured on the aircraft flying, at a predetermination time after take off, whose cabin is pressurized;
- calculating a third altitude corresponding to the aircraft's altitude with respect to the ground, from said first and second altitudes;
- comparing said third altitude with a predetermined altitude threshold; and
- displaying a failure cue relating to said air data system (2) on said display device (15), if said third altitude is less than said predetermined altitude threshold.

## Patentansprüche

1. Verfahren zum Feststellen der Fehlfunktion eines Drucksensors (5) einer Windmesserzentrale (2) eines Flugzeugs, umfassend zumindest zwei Drucksensoren (5), wobei nach diesem Verfahren zumindest die folgende erste Reihe von Schritten durchgeführt wird:
A1) Durchführen von Druckmessungen mit Hilfe der zwei Ducksensoren (5), um den ersten bzw. den zweiten Druckwert zu erhalten;
A2) Berechnen der Abweichung zwischen dem ersten und dem zweiten Druckwert;
A3) Vergleichen dieser Abweichung mit einem vorbestimmten Schwellenwert; und
A4) wenn die Abweichung größer als der Schwellenwert ist, Anzeigen einer Information der Fehlfunktion der Windmesserzentrale (2) auf einer Anzeigevorrichtung (15), die auf dem Flugzeug montiert ist,
**dadurch gekennzeichnet, dass** außerdem zumindest die folgende zweite Reihe von Schritten durchgeführt wird:
B1) Durchführen von Druckmessungen mit Hilfe von zumindest einem Drucksensor (5) der Windmesserzentrale (2) auf dem Flugzeug, das sich am Boden befindet, und dessen Kabine nicht unter Druck gesetzt ist, um einen dritten Druckwert zu erhalten;
B2) ausgehend von diesem dritten Druckwert Berechnen einer ersten Höhe, entsprechend der Höhe des Bodens;
B3) Unter-Druck-Setzen der Kabine des Flugzeugs;
B4) Starten des Flugzeugs;
B5) bei einer vorbestimmten Zeit nach dem Start Durchführen von Druckmessungen mit Hilfe des Drucksensors (5), um einen vierten Druckwert zu erhalten;
B6) ausgehend von diesem vierten Druckwert Berechnen einer zweiten Höhe, entsprechend der Höhe des Flugzeugs;
B7) Berechnen einer dritten Höhe, entsprechend der Höhe des Flugzugs bezüglich des Bodens, ausgehend von der ersten und der zweiten Höhe;
B8) Vergleichen der dritten Höhe mit einer vorbestimmten Schwellenhöhe; und
B9) wenn die dritte Höhe geringer als die vorbestimmte Schwellenhöhe ist, Anzeigen einer Information der Fehlfunktion der Windmesserzentrale (2) auf einer Anzeigevorrichtung (15), die auf dem Flugzeug montiert ist.

2. Verfahren nach Anspruch 1,
**dadurch gekennzeichnet, dass** außerdem die folgenden Schritte durchgeführt werden:
- Messen der Geschwindigkeit des Flugzeugs bezüglich der Luft, um einen Luftgeschwindigkeitswert zu erhalten;
- Vergleichen der so gemessenen Luftgeschwindigkeit mit einer vorbestimmten Schwellengeschwindigkeit; und
- Anzeigen einer Information der Fehlfunktion in Schritt A4 nur dann, wenn der Luftgeschwindigkeitswert höher als die Schwellengeschwindigkeit ist.

3. Verfahren nach Anspruch 2,
**dadurch gekennzeichnet, dass** die Schwellengeschwindigkeit im Wesentlichen gleich 25 m/s ist.

4. Verfahren nach einem der Ansprüche 1 bis 3,
**dadurch gekennzeichnet, dass** der Schwellenwert im Wesentlichen gleich 30 mbar ist.

5. Verfahren nach einem der vorhergehenden Ansprüche, **dadurch gekennzeichnet, dass** die zwei Drucksensoren (5) auf beiden Seiten der Längsachse (23) der Flugzeugs, auf dem Rumpf (3) des Letzteren, montiert werden.

6. Verfahren nach einem der vorhergehenden Ansprüche, **dadurch gekennzeichnet, dass** zumindest drei Drucksensoren (5) für die Windmesserzentrale (2) vorgesehen werden, **dadurch**, dass in Schritt A1) Druckmessungen mit Hilfe der drei Drucksensoren (5) durchgeführt werden, **dadurch**, dass in Schritt A2) alle möglichen Abweisungen zwischen den verschiedenen jeweils zwei genommenen Druckwerten berechnet werden, **dadurch**, dass in Schritt A3) alle so berechneten Abweichungen zum Schwellenwert verglichen werden, und **dadurch**, dass in Schritt A4) eine Information der Fehlfunktion je nach den verschiedenen so durchgeführten Vergleichen angezeigt wird oder nicht.

7. Verfahren nach Anspruch 6,
**dadurch gekennzeichnet, dass** in Schritt A4) eine Information der Fehlfunktion angezeigt wird, wenn zumindest eine der Abweichungen größer als der Schwellenwert ist.

8. Verfahren nach Anspruch 6,
**dadurch gekennzeichnet, dass** in Schritt A4) eine Information der Fehlfunktion nur dann angezeigt wird, wenn alle Abweichungen größer als der Schwellenwert sind.

9. Verfahren nach einem der vorhergehenden Ansprüche, **dadurch gekennzeichnet, dass** im Fall eines Flugzeugs, das mit zumindest zwei Motoren ausgestattet ist, die Schwellenhöhe geringer ist als die Höhe, erreicht vom Flugzeug, zur vorbestimmten Zeit nach dem Start, im Fall eines Ausfalls von zumindest einem der Motoren.

10. Verfahren nach Anspruch 9,
**dadurch gekennzeichnet, dass** die vorbestimmte Zeit nach dem Start im Wesentlichen gleich 30 Sekunden ist, und **dadurch**, dass die Schwellenhöhe im Wesentlichen gleich 30 Meter ist.

11. Verfahren nach einem der vorhergehenden Ansprüche,
**dadurch gekennzeichnet, dass** außerdem die folgenden Schritte durchgeführt werden:
- Überwachen der Funktion der Motoren des Flugzeugs; und
- beim Festestellen einer Fehlfunktion von zumindest einem der Motoren des Flugzeugs gegebenenfalls kein Anzeigen einer Information der Fehlfunktion in Schritt B9).

12. Verfahren nach einem der vorhergehenden Ansprüche,
**dadurch gekennzeichnet, dass** außerdem zumindest die folgende dritte Reihe von Schritten durchgeführt wird:
C1) Anbringen auf zumindest bestimmten der Drucksensoren (5) von zumindest einem Detektor (35), der dazu in der Lage ist, einen defekten Anschluss zwischen dem entsprechenden Drucksensor (5) und einer Sonde (4) der Windmesserzentrale (2), die mit diesem Drucksensor (5) assoziiert ist, festzustellen;
C2) Erfassen von Informationen bezüglich des Anschlusses, stammend von den Detektoren (35), am Boden, vor dem Start; und
C3) wenn zumindest einer der Detektoren (35) einen defekten Anschluss signalisiert, Anzeigen einer Information der Fehlfunktion der Windmesserzentrale (2) auf einer Anzeigevorrichtung (15), die auf dem Flugzeug montiert ist.

13. Verfahren nach Anspruch 12,
**dadurch gekennzeichnet, dass** zumindest einer der Detektoren (35) in einen pneumatischen Anschluss (7) integriert ist, der dazu vorgesehen ist, einen pneumatischen Schlauch (6), der mit einer Sonde (4) verbunden ist, mit dem entsprechenden Drucksensor (5) zu verbinden.

14. Vorrichtung zum Feststellen der Fehlfunktion eines Drucksensors (5) einer Windmesserzentrale (2) eines Flugzeugs, umfassend zumindest zwei Drucksensoren (5), wobei die Vorrichtung (1) Folgendes umfasst:
- Mittel (16) zum Erfassen der Druckmessungen, durchgeführt mit Hilfe der zwei Drucksensoren (5), um einen ersten bzw. einen zweiten Druckwert zu erhalten;
- Berechnungsmittel (17, 18), um die Abweichung zwischen dem ersten und dem zweiten Druckwert zu berechnen;
- Vergleichsmittel (19A, 19B), um diese Abweichung mit einem vorbestimmten Schwellenwert zu vergleichen; und
- Anzeigemittel (13), um auf zumindest einer Anzeigevorrichtung (15), die auf dem Flugzeug montiert ist, eine Information der Fehlfunktion der Windmesserzentrale (2) anzuzeigen, wenn die Abweichung größer als der Schwellenwert ist,
**dadurch gekennzeichnet, dass** sie außerdem Mittel umfasst, um entsprechend Folgendes durchzuführen:
- Berechnen einer ersten Höhe, entsprechend der Höhe des Bodens, ausgehend von einem dritten Druckwert, der auf dem Flugzeug gemessen wird, dass sich am Boden befindet, und dessen Kabine nicht unter Druck gesetzt ist;
- Berechnen einer zweiten Höhe, entsprechend der Höhe des Flugzeugs, ausgehend von einem Druckwert, der auf dem Flugzeug im Flug bei einer vorbestimmten Zeit nach dem Start gemessen wird, dessen Kabine unter Druck gesetzt ist;
- Berechnen einer dritten Höhe, entsprechend der Höhe des Flugzeugs bezüglich des Bodens, ausgehend von der ersten und der zweiten Höhe;
- Vergleichen der dritten Höhe mit einer vorbestimmten Schwellenhöhe; und
- Anzeigen einer Information der Fehlfunktion der Windmesserzentrale (2) auf der Anzeigevorrichtung (15), wenn die dritte Höhe geringer als die vorbestimmte Schwellenhöhe ist.
